# EUROPEAN PATENT APPLICATION

(11) **EP 4 557 100 A1**
(43) Date of publication of application: **21.05.2025**
(21) Application number: 23209871.5
(22) Date of filing: 14.11.2023
(51) Int. Cl.: G06F 11/10

(54) **METHODS AND APPARATUSES RELATING TO CHECKSUM GENERATION**

(71) Applicant: Nokia Solutions and Networks Oy, 02610 Espoo (FI)
(72) Inventor: Gravalos, Ilias, 14564 Athens (GR); Cetin, Riza, 2018 Antwerp (BE)
(74) Representative: Rahman, Nusrat

(57) **Abstract**

This specification describes a method comprising: processing, using a hash function which is configured to generate hashes of a given hash size, a plurality of data entries stored in a hierarchical data structure to generate a plurality of hashes which correspond to the plurality of data entries stored in the hierarchical data structure; and generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

## Description

### Field

This specification relates generally to checksum generation.

### Background

In modern computing systems and communications networks, a wide array of data is stored in data stores and exchanged between devices. Checksums are generated for use in verifying the integrity of such data.

### Summary

In a first aspect, this specification describes a method comprising: processing, using a hash function which is configured to generate hashes of a given hash size, a plurality of data entries stored in a hierarchical data structure to generate a plurality of hashes which correspond to the plurality of data entries stored in the hierarchical data structure; and generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

In some examples, the plurality of data entries stored in the hierarchical data structure correspond to a network configuration of a device entering or leaving a network, and the method further comprises: auditing the network configuration of the device by comparing the generated checksum with another checksum received via the network; or transmitting the generated checksum via the network for use in auditing the network configuration of the device. In addition or alternatively, at least two data entries of the plurality of data entries are stored in a particular level of the plurality of levels of the hierarchical data structure and are child data entries of a parent data entry stored in a layer which is higher than the particular layer. In this case, recursively combining the plurality of hashes to form the combined hash of the given hash size may comprise combining hashes of the given hash size which correspond to the child data entries to form a hash of the given hash size which corresponds to the parent data entry. In some such examples, the hash which corresponds to the parent data entry is processed, using the hash function, together with a label associated with the parent data entry to generate a further hash of the given hash size which corresponds to the parent data entry.

In some examples, the plurality of hashes are recursively combined to form the combined hash using a summation operation. In some such examples, each hash of the plurality of hashes comprises a list of values, and combining a given subset of the plurality of hashes using the summation operation comprises generating a list of values for the combined hash by performing element-wise addition on the lists of values comprised in the given subset of the plurality of hashes. In some examples, the hash function comprises one or a combination of: MD4, MD5, SHA-1, SHA-2, SHA-3, BLAKE2 and BLAKE3.

In some examples, a given data entry of the plurality of data entries stored in the hierarchical data structure comprises a key and a value, and processing the given data entry using the hash function to generate the hash of the plurality of hashes which corresponds to the given data entry comprises processing the key and the value together using the hash function. In some such examples, the key comprises a string label, and the value comprises string, integer, floating point, boolean, array, object or null-type data.

In a second aspect, this specification describes an apparatus comprising: means for processing, using a hash function which is configured to generate hashes of a given hash size, a plurality of data entries stored in a hierarchical data structure to generate a plurality of hashes which correspond to the plurality of data entries stored in the hierarchical data structure; and means for generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

In some examples, the plurality of data entries stored in the hierarchical data structure correspond to a network configuration of a device entering or leaving a network, and the apparatus further comprises: means for auditing the network configuration of the device by comparing the generated checksum with another checksum received via the network; or means for transmitting the generated checksum via the network for use in auditing the network configuration of the device. In addition or alternatively, at least two data entries of the plurality of data entries are stored in a particular level of the plurality of levels of the hierarchical data structure and are child data entries of a parent data entry stored in a layer which is higher than the particular layer. In this case, recursively combining the plurality of hashes to form the combined hash of the given hash size may comprise combining hashes of the given hash size which correspond to the child data entries to form a hash of the given hash size which corresponds to the parent data entry. In some such examples, the hash which corresponds to the parent data entry is processed, using the hash function, together with a label associated with the parent data entry to generate a further hash of the given hash size which corresponds to the parent data entry.

In some examples, the plurality of hashes are recursively combined to form the combined hash using a summation operation. In some such examples, each hash of the plurality of hashes comprises a list of values, and combining a given subset of the plurality of hashes using the summation operation comprises generating a list of values for the combined hash by performing element-wise addition on the lists of values comprised in the given subset of the plurality of hashes. In some examples, the hash function comprises one or a combination of: MD4, MD5, SHA-1, SHA-2, SHA-3, BLAKE2 and BLAKE3.

In some examples, a given data entry of the plurality of data entries stored in the hierarchical data structure comprises a key and a value, and processing the given data entry using the hash function to generate the hash of the plurality of hashes which corresponds to the given data entry comprises processing the key and the value together using the hash function. In some such examples, the key comprises a string label, and the value comprises string, integer, floating point, boolean, array, object or null-type data.

In a third aspect, this specification describes an apparatus comprising at least one processor and at least one memory storing instructions that, when executed by the at least one processor, cause the apparatus at least to perform: processing, using a hash function which is configured to generate hashes of a given hash size, a plurality of data entries stored in a hierarchical data structure to generate a plurality of hashes which correspond to the plurality of data entries stored in the hierarchical data structure; and generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

In some examples, the plurality of data entries stored in the hierarchical data structure correspond to a network configuration of a device entering or leaving a network, and the instructions stored on the at least one memory of the apparatus of the third aspect, when executed by the at least one processor, may cause the apparatus at least to perform: auditing the network configuration of the device by comparing the generated checksum with another checksum received via the network, or transmitting the generated checksum via the network for use in auditing the network configuration of the device. In addition or alternatively, at least two data entries of the plurality of data entries are stored in a particular level of the plurality of levels of the hierarchical data structure and are child data entries of a parent data entry stored in a layer which is higher than the particular layer. In this case, recursively combining the plurality of hashes to form the combined hash of the given hash size may comprise combining hashes of the given hash size which correspond to the child data entries to form a hash of the given hash size which corresponds to the parent data entry. In some such examples, the hash which corresponds to the parent data entry is processed, using the hash function, together with a label associated with the parent data entry to generate a further hash of the given hash size which corresponds to the parent data entry.

In some examples, the plurality of hashes are recursively combined to form the combined hash using a summation operation. In some such examples, each hash of the plurality of hashes comprises a list of values, and combining a given subset of the plurality of hashes using the summation operation comprises generating a list of values for the combined hash by performing element-wise addition on the lists of values comprised in the given subset of the plurality of hashes. In some examples, the hash function comprises one or a combination of: MD4, MD5, SHA-1, SHA-2, SHA-3, BLAKE2 and BLAKE3.

In some examples, a given data entry of the plurality of data entries stored in the hierarchical data structure comprises a key and a value, and processing the given data entry using the hash function to generate the hash of the plurality of hashes which corresponds to the given data entry comprises processing the key and the value together using the hash function. In some such examples, the key comprises a string label, and the value comprises string, integer, floating point, boolean, array, object or null-type data.

In a fourth aspect, this specification describes a non-transitory computer readable medium comprising program instructions stored thereon for performing at least any of the operations described above with reference to the first aspect.

### Brief Description of the Figs.

For a better understanding of the present application, reference will now be made by way of example to the accompanying drawings in which:
Fig. 1 is a schematic illustration of a device in communication with a network entity;
Fig. 2 is an example of data entries stored in a hierarchical data structure;
Fig. 3 is an schematic illustration of a hash combination operation that may be performed in accordance with examples described herein;
Fig. 4 is an example in accordance with examples described herein;
Fig. 5 is a flowchart illustrating various operations that may be performed in accordance with examples described herein;
Fig. 6 is a schematic illustration of an example configuration of a computing device which may be configured to perform various operations described with reference to Figs. 1 to 5; and
Fig. 7 is an illustration of a computer-readable medium upon which computer readable code may be stored.

### Detailed Description

In the description and drawings, like reference numerals refer to like elements throughout.

Checksums are used to verify the integrity of data stored or transmitted by computing devices (e.g. in communications networks). In particular, whilst it may be infeasible to individually inspect large numbers of data entries to verify their logical consistency, the data entries can instead be used to generate a checksum. The generated checksum may then be compared with another checksum generated for based on the data entries, such as a checksum generated before transmission or storage of the data. If the checksums match, this indicates with high probability that the data has not been altered or otherwise corrupted in the period of time between generation of the two checksums. On the other hand, if the checksums do not match, this indicates that data integrity has been lost. Put another way, a first checksum may be generated at a first time (e.g. prior to transmission and/storage) and a second checksum may be generated at a second time (e.g. after transmission and/or storage). An audit of the data integrity may be performed by comparing the first checksum with the second checksum. If the first checksum and the second checksum do not match, this indicates that data integrity has been lost in the interval between the first time and the second time.

A wide variety of checksum generation technique are known in the art, such as processing data entries using a hash function to generate a 'hash'. However, when data is stored in a hierarchical data structure, such as JavaScript Object Notation (JSON) format, the order of the individual data entries within levels of the data structure cannot always be guaranteed. Since different orderings of the input data give differing results when processed using a hash function, calculation of checksums for hierarchical data structures using hash functions becomes non-deterministic and hence unsuitable for verifying the integrity of unordered data. Put another way, because data entries stored in each level of a hierarchical data structure may be reordered without altering the meaning of the data stored, data structures storing identical information (but in a different order) may yield different checksums when processed with a hash function. As a result, comparison of checksums for differently ordered data may falsely indicate that data integrity has been lost.

For example, in JSON syntax, the following objects store the same information:

| **Device configuration A** | **Device configuration B** |
|---|---|
| *{"anv-device-holders: device-specific-* | *{"anv-device-holders: device-specific-* |
| *data":* { | *data":* { |
| *"bbf-xpongemtcont:gemports-config":* { | *"bbf-xpongemtcont:gemports-config":*{ |
| *"gemport":[{* | *"gemport":[{* |
| *"aes-indicator":false,* | *"aes-indicator":false,* |
| *"gemport-id":1024,* | *"gemport-id":1024,* |
| *"tcont-ref":"tcont1_onu1"*, | *"itf-ref":"subitf1_enet1_onu1"*, |
| *"itf-ref":"subitf1_enet1_onu1"*, | *"name": "gemport1_uni1_onu1"* |
| *"traffic-class":0,* | *"tcont-ref":"tcont1_onu1"*, |
| *"name": "gemport1_uni1_onu1"* | *"traffic-class":0,* |
| }] | }] |
| } | } |
| } | } |
| MD2: a2072a9b5ba9cc018fd09f32983ca0b0 | MD2: d104ea611bb2c061686e82311a9d2be |

Specifically, each of the JSON objects above store information relating to a configuration of a device entering or leaving a network. However, although each of the data entries (e.g. 'aes-indicator', 'gemport-id' etc.) stored in the deepest level of device configuration A (i.e. inside the 'gemport' object) match the corresponding data entries stored in the deepest level of device configuration B, the individual data entries are ordered differently between the two data structures. As such, processing each of the JSON objects as strings using a hash function to generate a checksum would yield different results (by way of example only, MD2 hashes of each of the device configurations are included in the last row of the table above). A comparison of the two hashes would then falsely indicate that the two device configurations do not match.

It will therefore be apparent that inconsistent ordering of data invalidates the efficient checksum method for verifying the integrity of data stored in a hierarchical data structure. Inconsistent ordering is particularly likely to occur in data structures which are updated dynamically, such as device configurations in a network.

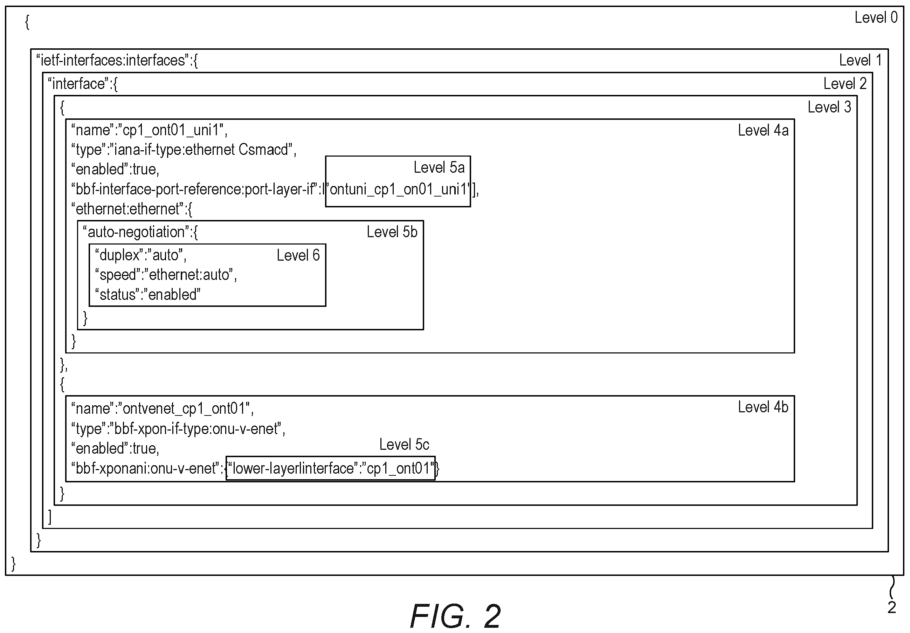

Whilst consistent checksums could be generated by sorting data entries prior to applying the hash function, sorting introduces further computational complexity and requires entities relying on the checksum to agree on the sorting criteria in advance, and may further require knowledge of the specific data model used to be effective. This issue is discussed in greater detail below with reference to Fig. 2.

It may therefore be beneficial to provide a mechanism by which checksums can be generated from data stored in a hierarchical data structure, irrespective of the order in which data entries are stored within the hierarchical data structure. In this way, the additional computational cost of sorting the data and associated complexities are avoided, whilst maintaining the validity of a checksum-based data integrity verification scheme.

Various implementations of the technology described herein provide such a mechanism for generating a checksum of data stored in a hierarchical data structure, whilst avoiding the complexities of sorting-based schemes. Put another way, various implementations of the technology described herein may enable generation of checksums, such as checksums of JSON input data, in a deterministic manner.

Whilst the checksum generation methods described herein are applicable across a broad range of technological domains, various benefits will be apparent in the context of modern communications networks. For instance, checksums generated in accordance with the methods described herein may be used for auditing network configurations between a software-defined access network (SDAN) controller and physical network elements (NEs) or virtualised network functions (VNFs). Checksums generated in accordance with the methods described herein may also be used to ensure successful switchover of an Optical Network Unit (ONU) Management function between Optical Line Terminals (OLTs) under Type-B protection. In this situation, inconsistencies between the configurations of the OLTs may result in service interruption when the ONU Management function attempts alignment. As such, it is required that the configuration between the OLTs is consistent. As will be appreciated, OLT configurations may be audited for consistency using the checksum generation method described herein.

In some examples, the term 'checksum' may refer to a value or string which is derived from a given piece of data for the purpose of verifying the integrity of that data. For instance, checksums may be generated by processing the data using a hash function to generate a hash of a given hash size. In such examples, the checksum itself may also be referred to as a 'hash'. In the below discussion, HASH0, HASH1 etc. is used as shorthand for individual hashes.

Hash functions are functions which can map arbitrary length data to hashes of a fixed size. As will be appreciated, any suitable hash function may be used for generating checksum hashes of data. For instance, hashes may be generated using at least one of: MD4, MD5, SHA-1, SHA-2, SHA-3, BLAKE2 and BLAKE3 hash functions, or a combination of these functions (e.g. via function composition, or by concatenation, multiplication or addition of the resulting hashes). In some examples, data may be pre-processed prior to generation of the hash. For instance, data stored in a text format may have whitespace and/or non-printable characters removed before it is processed with the hash function to generate the checksum. When data is not already stored in a text/string format, the data may first be transformed to a sequence of bytes (e.g. represented by pairs of hexadecimal digits) in a string format.

In some examples, the term 'hierarchical data structure' may refer to a data structure or file format in which data is stored in a plurality of hierarchical levels (or layers). For instance, a hierarchical data structure may be represented as a tree, with each level of the hierarchical data structure corresponding to a node of the tree. In this representation, each level of the hierarchical data structure, other than the highest level, may be considered to be a child node of a higher level in the hierarchical data structure. Various additional aspects of hierarchical data structures are described in more detail below with reference to Fig. 2. Individual data entries (or 'attributes') are stored in specific levels of the hierarchical data structure.

Various aspects of the technology described herein may be applicable to data stored and/or exchanged in the JSON data format, a structured data format whose rules, syntax and semantics are defined in ECMA-404, RFC 8259 and ISO/IEC 21778:2017. JSON is widely used in modern networks, computer systems and internet applications for both data storage and the exchange of information. In particular, JSON is widely used over several communication protocols that implement modern application programming interfaces (APIs), such as microservices architecture, due to its advantage of being readable by both humans and machines. For instance, RESTful APIs may use JSON to encode information for exchange between peer entities in a network (e.g. via HyperText Transfer Protocol, HTTP). Examples of frameworks that support JSON are gRPC, Kafka and RESTCONF RFC 8040. JSON is also used for encoding data stored in databases (e.g. MongoDB, Redis). As mentioned above, the technology described herein may be particularly applicable to modern software defined network (SDN) REST/RESTCONF APIs, which are used to manage communications between devices (e.g. terminal devices or user equipment, UE) and device management components (e.g. SDN controllers), as well as between virtual network functions (VNFs) executing on the cloud. Various aspects of the technology described herein may also be applicable to the protocols described in Broadband Forum (BBF) technical specifications BBF TR-413, WT-484, and TR-451.

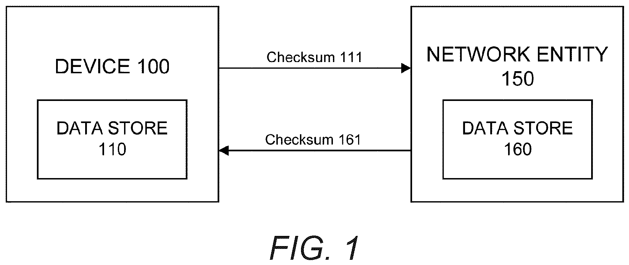

Fig. 1 depicts a device 100 in communication with a network entity 150. For instance, device 100 may comprise a physical computing device (e.g. a terminal device, user equipment, UE, or base station) and network entity 150 may comprise a network controller (e.g. a virtualised network controller). However, it will be appreciated that various aspects described below with reference to Fig. 1 may be applicable to other types of physical and/or virtual devices in addition to those described herein, as well as to various online service-based applications.

In general terms, the example of Fig. 1 relates to the situation in which device 100 generates a checksum 111 based on data stored in a hierarchical data structure within data store 120. Device 100 may compare checksum 111 with a checksum 161 received from network entity 150 to verify the integrity of data stored in data store 120, or may transmit checksum 111 to network entity 150 for use in verifying the integrity of data stored within data store 160.

In particular, device 100 uses a hash function (e.g. a MD4, MD5, SHA-1, SHA-2, or SHA-3 hash function) which is configured to generate hashes of a given hash size to process a plurality of data entries stored in a hierarchical data structure (within data store 120) to generate a plurality of hashes which correspond to the plurality of data entries stored in the hierarchical data structure. Device 100 generates a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size. This process, which is used to enable generation of checksums which do not depend on the ordering of the individual data entries within levels of the hierarchical data structure, is described schematically with reference to both Figs. 1 and 2 below.

As mentioned above, the plurality of data entries stored in the hierarchical data structure may correspond to a network configuration of a device entering or leaving a network. Given the complex and dynamic nature of modern networks in which devices and virtual functions appear and disappear autonomously and/or asynchronously, with network configurations also being dynamically modified (e.g. based on service assurance decisions), it is challenging to maintain consistent ordering of data entries within network configuration files between different devices/network entities. Moreover, even if a format such as JSON is used as a transient format to convey data between devices, such data may be transformed to an internal format for storage. It will therefore be apparent that any ordering of data entries within configuration data files can be lost easily within a network.

Various example aspects of the checksum generation process described herein are set out with reference to 'device configuration A' above (and equivalently for 'device configuration B'). In this case, the levels of the hierarchical data structure may be expressed as follows:

| **Level** | **Entries** |
|---|---|
| 0 (highest level) | *{ **level 1 entries** }* |
| 1 | *"anv-device-holders: device-specific-data":{ **level 2 entries** }* |
| 2 | *"bbf-xpongemtcont:gemports-config":{ **level 3 entries** }* |
| 3 | *"gemport"[{ **level 4 entries** }]* |
| 4 (lowest level) | *"aes-indicator":false,* |
| | *"gemport-id": 1024,* |
| | *"tcont-ref":"tcont1_onu1"*, |
| | *"itf-ref":"subitf1_enet1_onu1"*, |
| | *"traffic-class":0,* |
| | *"name":"gemport1_uni1_onu1"* |

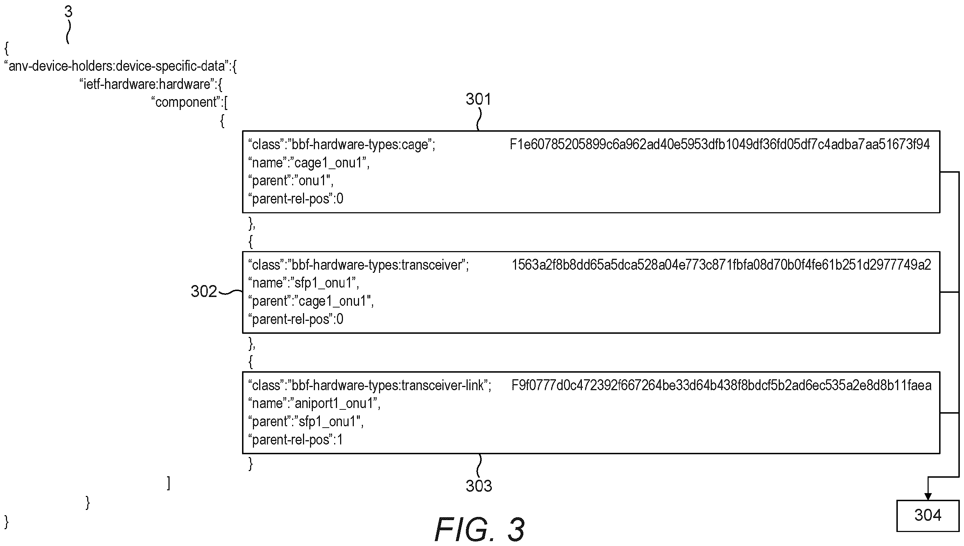

The hierarchical nature of the data is apparent from the bold text, which indicates where entries of a lower level are recursively included within a 'parent' level (e.g. the text ***'level 1 entries'*** indicates where the entries from level 1 should be recursively included in level 0). In the example of Fig. 1, device 100 generates a checksum from the above data by recursively combining checksums from the lowest level (level 4) to the highest level (level 0). In particular, each of the six entries stored in level 4 of the hierarchical data structure are processed using a hash function to generate six corresponding hashes of a given hash size. These hashes are then combined to form a single hash for the lowest level that does not depend on the order in which the hashes are combined (e.g. by using element-wise summation), denoted by HASH4. Since the hash combination process is order-independent, HASH4 takes the same value for device configuration B as it does for device configuration A. Various aspects of the hash combination process are described below with reference to Fig. 3.

HASH4 is then inserted in place of the 'level 4 entries' in level 3, such that the corresponding row of the table above reads: *'"gemport"[{ HASH4 }]*'. The resulting string is then processed using the hash function, to generate a hash for level 3, denoted HASH3. In turn, this is inserted into level 2 to give *'"bbf-xpongemtcont:gemports-config":{ HASH3* }'. Again, this string is processed using the hash function to generate a further hash, denoted HASH2. Once again, this hash is inserted into the next level up (level 1), yielding *'"anv-device-holders: device-specific-data":* { *HASH2}'.* Yet again, this string is processed using the hash function to generate a hash for level 1, denoted HASH1. Finally, for the highest level (level 0), HASH 1 is substituted into the top row of the table, giving '{ HASH1 }'. This string is then processed using the hash function to generate a final hash, HASH0. Since each of HASH0 to HASH4 are generated using the same hash function, they have the same hash size.

HASH0 is therefore a hash of all of the data from device configuration A, and so may be used as a checksum for verifying the integrity of the device configuration. For instance, in the situation in which device configuration A is stored in data store 110 at computing device 100 and device configuration B is stored in data store 160 at network entity 150, device 100 may generate a first checksum 111 based on device configuration A and network entity 150 may generate a second checksum 161 based on device configuration B, in the manner described above. In some examples, device 100 may receive second checksum 161 from network entity 150. Device 100 may then compare second checksum 161 with first checksum 111 in order to audit the network configuration of the device currently stored in data store 110 (i.e. device configuration A). In addition or alternatively, device 100 may transmit first checksum 111 to network device 150 for use in auditing the network configuration of the device currently stored in data store 160 (i.e. device configuration B). As explained above, when generated using the recursive checksum calculation method described herein, the respective hash values for device configuration A and device configuration B match. In this example, the audit will therefore indicate that the network configuration is consistent and/or up to date.

Whilst device configuration A has multiple entries in the lowest level, and only single entries in the upper levels, it will be appreciated that this may not always be the case. A more complicated example of a hierarchical data structure in which multiple hierarchical levels include a plurality of unordered entries is described below with reference to Fig. 2.

Fig. 2 depicts a plurality of data entries stored in a hierarchical data structure, indicated generally by the reference sign 2, in accordance with various aspects described herein. In particular, Fig. 2 depicts a hierarchical data structure with a plurality of levels indicated by concentric boxes. By way of example only, the hierarchical data structure of Fig. 2 is depicted in JSON syntax, in which levels of the data structure are delimited by curly braces "{}" (which define objects) or square brackets "[]" (which define arrays), though the discussion below applies equally to other hierarchical data formats.

As with the device configurations described with reference to Fig. 1, the hierarchical data structure depicted in Fig. 2 has a plurality of levels arranged in a tree-like structure as follows:

| **Level** | **Data entries** |
|---|---|
| 0 (highest level) | *{ **level 1 entries** }* |
| 1 | *"ietf-interfaces:interfaces":{ **level 2 entries** }* |
| 2 | *"interface":[ **level 3 entries** ]* |
| 3 | *{ **level 4a entries, level 4b entries** }* |
| 4a | *"name":"cp1_ont01_uni1",* |
| | *"type":"iana-if-type:ethernetCsmacd",* |
| | *"enabled":true,* |
| | *"bbf-interface-port-reference:port-layer-if":[ **level 5a entries** ]*, |
| | *"ethernet;ethernet";{ **level 5b entries** }* |
| 5a (*) | *["ontuni_cp1_ont01_uni1"]* |
| 5b | *"auto-negotiation":*{ ***level 6 entries** }* |
| 6 (*) | *"duplex":"auto",* |
| | *"speed":"ethernet:auto",* |
| | *"status":"enabled"* |
| 4b | *"name":"ontvenet_cp1_ont01",* |
| | *"type":"bbf-xpon-if-type:onu-v-enet";* |
| | *"enabled":true,* |
| | *"bbf-xponani:onu-v-enet":{ **level 5c entries** }* |
| 5c (*) | *"lower-layer-interface":"cp1_ont01*" |

In this example, level 0 is the highest level, but there are multiple 'lowest levels', indicated by asterisks (levels 5a, 6 and 5c). In this case, the term 'lowest level' refers to a level of the hierarchical data structure that does not have another level nested within it. If the levels of the hierarchical data structure are considered as nodes of a tree data structure, the 'lowest levels' are the leaf nodes.

To generate a checksum for the hierarchical data structure of Fig. 2, each of the entries which do not include entries from a lower level of the hierarchical data structure are processed using a hash function to generate hashes of a given length. For instance, the first three entries in level 4a, the sole entry in level 5a, the three entries in level 6, the first three entries in level 4b and the sole entry in level 5c may be processed to generate corresponding hashes. As described with reference to Fig. 1, the hashes are then recursively combined from a lowest level of the hierarchical data structure to a highest level of the hierarchical data structure, thereby to form a combined hash of the given hash size. For instance, the three hashes of the entries in level 6 are combined to form a hash corresponding to level 6, HASH6. The resulting hash is then inserted into the entry for level 5b, yielding *'"auto-negotiation":*{ *HASH6* }'. The resulting string is then processed with the hash function to give HASH5b, corresponding to level 5b. Likewise, the hash of the sole entry in level 5a may be denoted by HASH5a. These two hashes (HASH5a and HASH5b) may be inserted into the corresponding entries of level 4a, yielding the two strings *"'bbf interface-port-reference:port-layer-if":[ HASH5a ]',* and *'"ethernet:ethernet":{ HASH5b* }'. These two strings are then processed with the hash function to generate a further two hashes, which are combined with the hashes of the other three entries in level 4a to yield a combined hash corresponding to level 4a, HASH4a.

Proceeding similarly, starting from the other lowest level of the hierarchical data structure (level 5c), hashes corresponding to the remaining entries may be recursively combined until the highest level is reached, resulting in a final hash, HASH0, which may be used as a checksum for the whole hierarchical data structure.

As will be appreciated, the recursive nature of the checksum generation process described herein lends itself well to parallelisation. As such, in some examples, hashes corresponding to various data entries and/or levels of the hierarchical data structure may be generated in a concurrent manner. However, in other examples, the generation may be performed sequentially.

At each step in the recursive combination process, one or more hashes are combined to form a single hash that does not depend on the order in which the hashes are combined. In this way, consistent hash values are guaranteed, even if data is reordered within the hierarchical data structure. As mentioned above, this is particularly relevant in the context of modern networks, in which devices and virtual functions enter and leave the network autonomously, due to the difficulty of maintaining a consistent ordering of data entries when transferring network configuration information between devices.

Whilst, as mentioned above, this problem may be tackled through sorting the data entries within the hierarchical data structure, it may not always be apparent which sorting criteria should be used. For instance, in the JSON format, arrays of objects may be validly sorted using any of the members of the objects as a sorting key. To sort objects having multiple data entries, it therefore becomes necessary for the sorting algorithm to include data model-specific knowledge in order to consistently sort the data, as well as to introduce a mechanism by which the peer entities of an audit may agree on these criteria. This may introduce additional complexities on both the device- and network-side, and may be resource-intensive to perform in real-time in a dynamic modern network.

The recursive hash combination process described above with reference to the previous Figs. may therefore enable these additional complexities to be avoided.

Fig. 3 schematically depicts a hash combination operation, in accordance with various examples described herein. In particular, Fig. 3 depicts a hierarchical data structure, indicated generally by the reference numeral 3, containing an array ("component") of objects 301 to 303.

In general terms, the example of Fig. 3 relates to generating a combined hash 304 by combining hashes corresponding to each of the objects 301 to 303. As will be appreciated, this combination operation may be performed as part of the checksum generation mechanism described with reference to the previous Figs. Although, in the example of Fig. 3, the hash combination method is described in the context of combining hashes corresponding to three objects stored in array, it will be appreciated that a similar method may be applied to combine any number of hashes corresponding to data entries, which may be any combination of primitive types, objects or arrays.

As mentioned above, the plurality of hashes 301 to 303 may be combined to form the combined hash 304 using a summation operation. For instance, as depicted in Fig. 3, each of hashes 301 to 303 may comprise a list of values. The hashes are then combined by performing element-wise addition on the lists of values comprised in the given subset of the plurality of hashes, thereby to generate another list of values which corresponds to the combined hash 304.

Put another way, a hash may be represented as a list of bytes. Each byte may be represented by a pair of hexadecimal digits, as depicted in Fig. 3. To combine multiple hashes in an order-agnostic manner, the lists corresponding to each of the hashes may be combined byte-by-byte. Specifically, if the value of the ith byte in the list for the ;th hash is given by *bⱼ*[*i*]*,* the ith byte of the combined hash may be calculated as *H*[*i*] = Σ*ⱼbⱼ*[*i*]*.* This sum may be performed in modulo 0x100 in hexadecimal, or, equivalently, modulo 256 in decimal.

In this way, a combined hash 304 is generated of the same hash size as the individual hashes 301 to 303. This order-independent method for combining hashes may therefore be used recursively for generating a hash of a hierarchical data structure as described with reference to the previous Figs.

In some examples, other operations may be used to combine the individual bytes of the hashes 301 to 303. For instance, rather than addition, the individual bytes may be XORed or multiplied together. Other order-agnostic operations may be used to combine the individual bytes (e.g. commutative and associative operations).

Put another way, whilst a variety of operations could be used to combine the hashes, certain operations (e.g. non-linear operations) may change the structure of the individual data entries, meaning that the original data is lost. Instead, a linear operation should be performed between the lists of values, meaning that bytes in corresponding positions in the list are combined with one another (i.e. the 1^{st} byte of hash 301 is combined with the 1^{st} bytes of hash 302 and 303 respectively, etc.). In this regard, it will be apparent that only hashes of the same hash size may be combined in this manner. For instance, this may be achieved by using the same hash function (e.g. SHA-1) to generate the hashes.

In examples in which the list of values within one of the hashes is rotated or subjected to a particular permutation, the same rotation(s)/permutation(s) should be applied to the other hashes to ensure the combination is consistent. Similarly, it will be apparent that the same combination method should be used when recursively combining hashes of data entries stored in each of a plurality of levels of a hierarchical data structure so as to ensure consistency.

It will be appreciated that each of hashes 301 to 303 may in turn have been generated by combining individual hashes. For instance, in the example of Fig. 3, the hash corresponding to object 301 may be formed by processing each of the individual attributes included within object 301 (i.e. *"class", "name", "parent"* and *"parent-retpos"*) using the hash function to generate four hashes, then combining these four values using the method described above to arrive at the hash corresponding to object 301. In this way, the recursive nature of the checksum generation method described herein will be apparent.

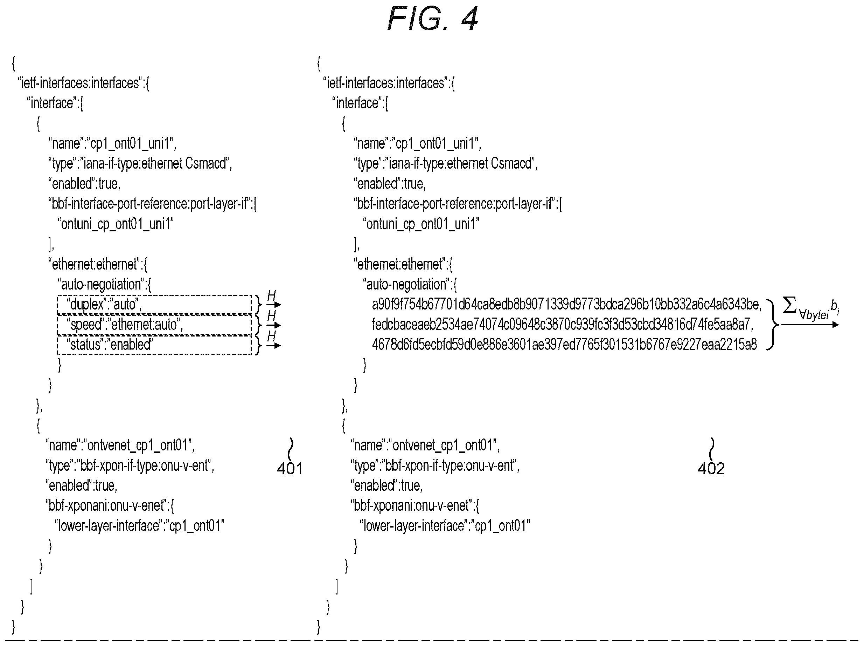

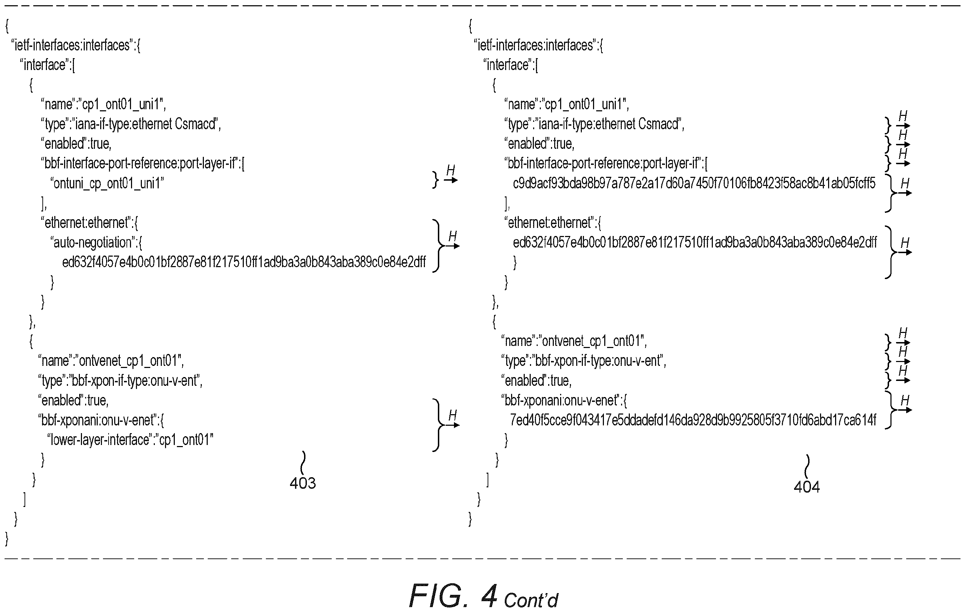

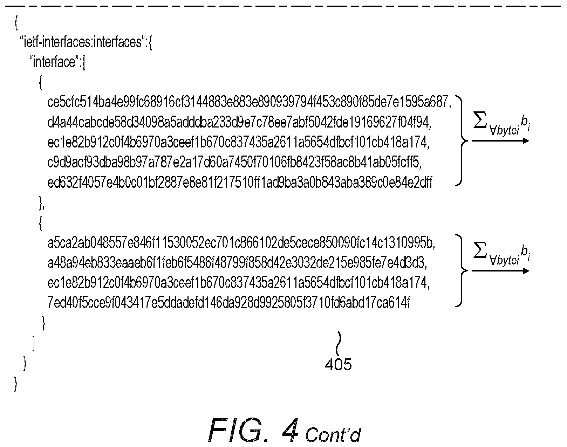

Fig. 4 depicts an example application of the recursive checksum generation method to a hierarchical data structure. As with the previous examples, whilst the hierarchical data structure of Fig. 4 is depicted in JSON format, the operations described herein are also applicable to other types of hierarchical data structure.

In general terms, various aspects of the method described with reference to Fig. 4 relate to transforming input JSON data into a string checksum that is agnostic to both the data model and the order of the internal JSON constructs. Specifically, the checksum is generated via a 'divide and conquer' method, wherein the data structure is divided into concentric layers (as implied by the JSON format), with the final hash generated by recursively, from a bottom layer to a highest layer, combining hashes from each of the layers.

Put another way, and as depicted in Fig. 2 above, the hierarchical levels may correspond to JSON objects having fields which represent child objects. A hash is generated for each of the child objects, then combined as described above with reference to Fig. 3. The logic is applied recursively from the inner layer(s) (i.e. the deepest/lowest layer(s)) to the outer layer (i.e. the highest/shallowest layer) until the root of the JSON data is reached, giving a final checksum corresponding to the whole data structure.

Put yet another way, the checksum may be generated as follows:
1. Traverse the input data to reach the lowest level (i.e. the leaves, in a tree representation)
2. For each data entry in the current level, generate a hash (i.e. a sequence of hexadecimal byte values) using a hash function. Where the current level corresponds to an object, the data entries are the fields of the object.
3. Sum the hash values generated in step 2 byte-by-byte. The result is another sequence of hexadecimal byte values of the same length as the operands of the summation (i.e. the results of step 2)
4. Move one level up the hierarchical data structure and repeat steps 2 and 3

This sequence of operations is performed until the highest level of the hierarchical data structure, or the root node in the tree representation, is reached.

A specific non-limiting example of application of this process is depicted in Fig. 4. For brevity, detailed description of aspects of the recursive checksum generation process that have already been described with reference to the previous Figs. is not repeated here.

In a first step, indicated generally by 401, a plurality of hashes are generated based on the data entries stored in the lowest level of the hierarchical data structure. Specifically, these data entries are the fields of the *"auto-negotiation"* JSON object. In Fig. 4, the generation of hash values based on a given data entry stored in the hierarchical data structure is indicated with an arrow bearing the letter 'H'.

In a second step, indicated generally by 402, the plurality of hashes generated in the first step 401 are combined to form a single hash corresponding to the entries included in the lowest level of the hierarchical data structure. As will be appreciated, this combination may be performed as described above with reference to Fig. 3. In Fig. 4, this combination is indicated by an arrow bearing a symbolic indication of byte-by-byte summation.

In a third step, indicated generally by 403, hashes are generated for the next level up. Specifically, a hashes of each of *"ontuni_cp1_ont01_uni1"* and *"lower-layer-interface": "cp1*_*ont01"* are generated by application of the hash function. A further hash is generated by processing the hash generated in the second step 402 together with its key, i.e. the string *'"auto-negotiation":*{ *HASH* }'.

Since all of the hashes generated in step 403 are singletons, that is, they are the sole member of an object/array (and hence do not suffer from the problem of having multiple equivalent orderings), the method proceeds to generate hashes for the next level without performing a combination operation.

In a fourth step, indicated generally by 404, hashes are generated for the next level up. In particular, hashes are generated for each of the data entries/objects included in the two members of the *"interface"* array. As will be appreciated, some of these entries are generated by processing a simple string corresponding to the data entry (e.g. *'"enabled":true'*)*,* whilst others are generated as described with reference to step 403 by processing a key together with a hash generated in the previous step (e.g. *'"ethernet:ethernet{ HASH }*').

In a fifth step, indicated generally by 405, the hashes generated in the previous step are combined to form combined hashes corresponding to the entries of the "interface" array. In some examples, since entries of the *"interface"* array are enclosed in curly braces {}, the hashes corresponding to each of the entries may be enclosed in braces and processed with the hash function again.

In a sixth step, not depicted, a hash corresponding to the contents of the interface array is generated by combining the hashes generated in the previous step. Similarly to described with reference to step 403, a further hash corresponding to the interface array may be generated by processing the hash corresponding to the contents together with the key (i.e. by processing the string *'"interface":[ HASH ]*' with the hash function).

In a subsequent step, not depicted, a final hash is generated by processing the toplevel key together with the combined hash generated based on its members. For instance, in the example of Fig. 4, this may be achieved by processing the string *'"ietf-interfaces:interfaces":{ HASH* }'. In some examples, a further hash is generated by processing the resulting hash enclosed in curly braces {} using the hash function (since the outer braces may be considered to be the highest level, level 0).

Although, the preceding examples, checksums have been generated for an entire hierarchical data structure by recursively combining hashes from a lowest level to a highest level of the data structure, it will be appreciated that the method may terminate early so as to generate a checksum for only part of the hierarchical data structure. Put another way, subsets of the hierarchical data structure which can themselves be considered to be hierarchical data structures may also have checksums calculated according to the methods described herein.

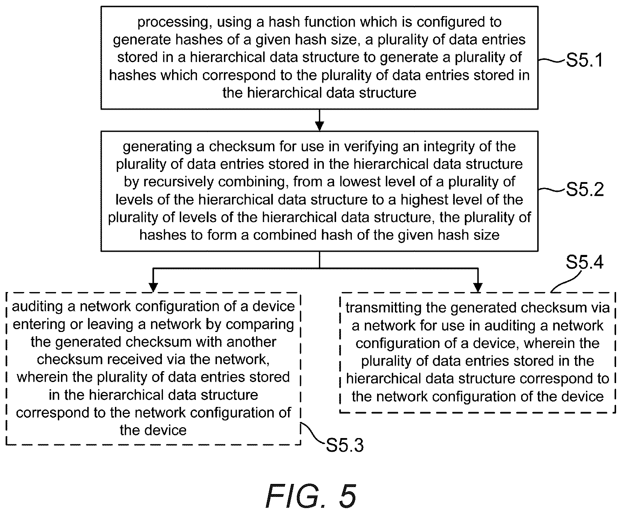

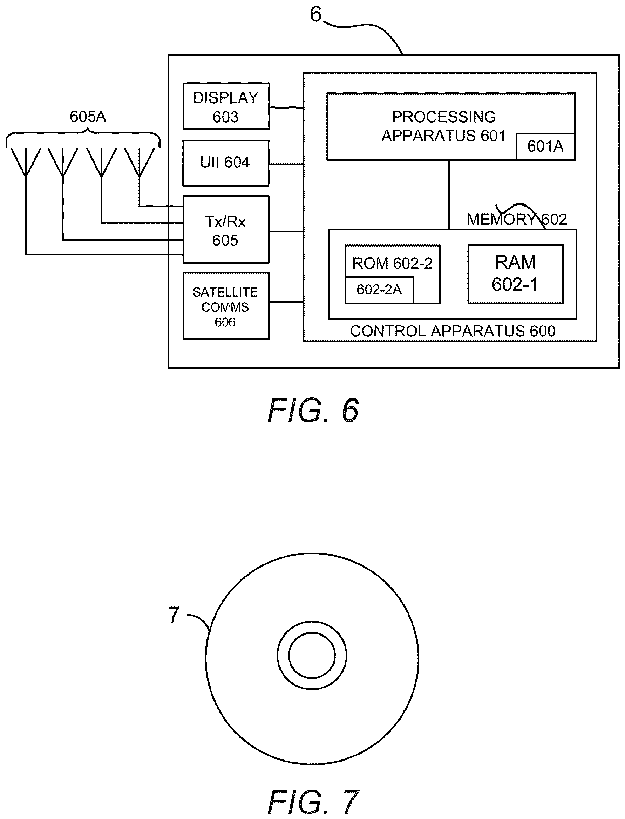

Fig. 5 is a flowchart depicting various operations which may be performed in accordance with various examples. For instance, the operations depicted in Fig. 5 may be executed by a network device or other suitable apparatus, such as that described with reference to Fig. 6.

In operation S5.1, a plurality of data entries stored in a hierarchical data structure are processed, using a hash function which is configured to generate hashes of a given hash size, to generate a plurality of hashes which correspond to the plurality of data entries stored in the hierarchical data structure. In some examples, the hash function comprises one or a combination of: MD4, MD5, SHA-1, SHA-2, SHA-3, BLAKE2 and BLAKE3.

In some examples, at least two data entries of the plurality of data entries are stored in a particular level of the plurality of levels of the hierarchical data structure and are child data entries of a parent data entry stored in a layer which is higher than the particular layer. In this case, recursively combining the plurality of hashes to form the combined hash of the given hash size comprises combining hashes of the given hash size which correspond to the child data entries to form a hash of the given hash size which corresponds to the parent data entry. In some such examples, the hash which corresponds to the parent data entry is processed, using the hash function, together with a label associated with the parent data entry to generate a further hash of the given hash size which corresponds to the parent data entry.

The plurality of hashes may be recursively combined to form the combined hash using a summation operation. For instance, each hash of the plurality of hashes may comprise a list of values, and a given subset of the plurality of hashes may be combined using the summation operation by generating a list of values for the combined hash by performing element-wise addition on the lists of values comprised in the given subset of the plurality of hashes.

In some examples, a given data entry of the plurality of data entries stored in the hierarchical data structure comprises a key (e.g. a string label) and a value (e.g. string, integer, floating point, Boolean, array, object or null-type data). In such examples processing the given data entry using the hash function to generate the hash of the plurality of hashes which corresponds to the given data entry may comprise processing the key and the value together using the hash function.

Put another way, the data entries stored in the hierarchical data structure may be formatted in key-value pairs. The keys correspond to 'names', whilst the values comprise one or more of the following abstract data types: primitive types, arrays or objects. Primitive types, or 'built-in' types, may be strings, numbers, Booleans, or null type variables. Arrays comprise an ordered sequence of zero or more values, which in turn may be one or a combination of primitives, arrays and objects. Objects comprise an unordered sequence of zero or more values, which again may be one or a combination of primitives, arrays and objects.

In operation S5.2, a checksum is generated for use in verifying an integrity of the plurality of data entries stored in the hierarchical data structure. Specifically, the checksum is generated by recursively combining, from a lowest level of a plurality of levels of the hierarchical data structure to a highest level of the plurality of levels of the hierarchical data structure, the plurality of hashes to form a combined hash of the given hash size.

In some examples, the plurality of data entries stored in the hierarchical data structure correspond to a network configuration of a device entering or leaving a network. In some such examples, the method includes operation S5.3 in which the network configuration of the device is audited by comparing the generated checksum with another checksum received via the network. In other examples, the method includes operation S5.4 in which the generated checksum is transmitted via the network for use in auditing the network configuration of the device.

As will of course be appreciated, various operations illustrated in Fig. 5 may correspond to operations already described with reference to the preceding Figs.

Fig. 6 is a schematic illustration of an example configuration of a computing apparatus 6 which may be configured to perform various operations performed by the devices and network entities described with reference to Figs. 1 to 5.

Computing apparatus 6 may comprise control apparatus 600 which is configured to control operation of other components which form part of the computing apparatus 6 thereby to enable performance of various operations performed by the SMF, the CHF, and/or the PCF described with reference to Figs. 1 to 5. The computing apparatus 600 may comprise processing apparatus 601 and memory 602. Computer-readable code 602-2A may be computer-readable code for any the devices and/or network entities described herein, and the computer-readable code 602-2A may be stored on the memory 602, which when executed by the processing apparatus 601, causes the control apparatus 600 to perform any of the operations of the device and/or network entities described herein.

In addition, computing apparatus 6 may further include a network interface 606 for communicating with other computing apparatuses 6.

Some further details of components and features of the above-described entity/apparatus/device 6 and alternatives for them will now be described.

The control apparatuses described above 600 may comprise processing apparatus 601 communicatively coupled with memory 602. The memory 602 has computer readable instructions 602-2A stored thereon, which when executed by the processing apparatus 601 causes the control apparatus 600 to cause performance of various ones of the operations described with reference to Figs. 1 to 5. The control apparatus 600 may in some instances be referred to, in general terms, as "apparatus".

The processing apparatus 601 may be of any suitable composition and may include one or more processors 601A of any suitable type or suitable combination of types. Indeed, the term "processing apparatus" should be understood to encompass computers having differing architectures such as single/multi-processor architectures and sequencers/parallel architectures. For example, the processing apparatus 601 may be a programmable processor that interprets computer program instructions 602-2A and processes data. The processing apparatus 601 may include plural programmable processors. Alternatively, the processing apparatus 601 may be, for example, programmable hardware with embedded firmware. The processing apparatus 601 may alternatively or additionally include one or more specialised circuit such as field programmable gate arrays FPGA, Application Specific Integrated Circuits (ASICs), signal processing devices etc. In some instances, processing apparatus 601 may be referred to as computing apparatus or processing means.

The processing apparatus 601 is coupled to the memory 602 and is operable to read/write data to/from the memory 602. The memory 602 may comprise a single memory unit or a plurality of memory units, upon which the computer readable instructions (or code) 602-2A is stored. For example, the memory 602 may comprise both volatile memory 602-1 and non-volatile memory 602-2. In such examples, the computer readable instructions/program code 602-2A may be stored in the non-volatile memory 602-2 and may be executed by the processing apparatus 601 using the volatile memory 602-1 for temporary storage of data or data and instructions. Examples of volatile memory include random-access memory (RAM), dynamic random-access memory (DRAM), and synchronous dynamic random-access memory (SDRAM) etc. Examples of non-volatile memory include read-only memory (ROM), programmable read-only memory (PROM), electronically erasable programmable read-only memory (EEPROM), flash memory, optical storage, magnetic storage, etc.

The memory 602 may be referred to as one or more non-transitory computer readable memory medium or one or more storage devices. Further, the term 'memory', in addition to covering memory comprising both one or more non-volatile memory and one or more volatile memory, may also cover one or more volatile memories only, one or more non-volatile memories only. In the context of this document, a "memory" or "computer-readable medium" may be any media or means that can contain, store, communicate, propagate or transport the instructions for use by or in connection with an instruction execution system, apparatus, or device, such as a computer.

The computer readable instructions/program code 602-2A may be pre-programmed into the control apparatus 600. Alternatively, the computer readable instructions 602-2A may arrive at the control apparatus via an electromagnetic carrier signal or may be copied from a physical entity 7 such as a computer program product, a memory device or a record medium such as a compact disc read-only memory (CD-ROM) or digital versatile disc (DVD) an example of which is illustrated in Fig. 7. The computer readable instructions 602-2A may provide the logic and routines that enables the entity/device/apparatus 6 to perform the functionality described above. The combination of computer-readable instructions stored on memory (of any of the types described above) may be referred to as a computer program product. In general, references to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined. Similarly, it will also be appreciated that the flow diagram of Fig. 5 is an example only and that various operations depicted therein may be omitted, reordered and/or combined.

Although the methods and apparatuses have been described in connection with modern communications networks, it will be appreciated that they are not limited to such networks and are applicable to radio networks of various different types and indeed other types of computing system.

Although various aspects of the methods and apparatuses described herein are set out in the independent claims, other aspects may comprise other combinations of features from the described embodiments and/or the dependent claims with the features of the independent claims, and not solely the combinations explicitly set out in the claims.

It is also noted herein that while various examples are described above, these descriptions should not be viewed in a limiting sense. Rather, there are several variations and modifications which may be made without departing from the scope of the present invention as defined in the appended claims.

## Claims

1. A method comprising:
processing, using a hash function which is configured to generate hashes of a given hash size, a plurality of data entries stored in a hierarchical data structure to generate a plurality of hashes which correspond to the plurality of data entries stored in the hierarchical data structure; and
generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

2. The method of claim 1,
wherein the plurality of data entries stored in the hierarchical data structure correspond to a network configuration of a device entering or leaving a network, and
wherein the method further comprises:
auditing the network configuration of the device by comparing the generated checksum with another checksum received via the network; or
transmitting the generated checksum via the network for use in auditing the network configuration of the device.

3. The method of claim 1 or claim 2,
wherein at least two data entries of the plurality of data entries are stored in a particular level of the plurality of levels of the hierarchical data structure and are child data entries of a parent data entry stored in a layer which is higher than the particular layer, and
wherein recursively combining the plurality of hashes to form the combined hash of the given hash size comprises combining hashes of the given hash size which correspond to the child data entries to form a hash of the given hash size which corresponds to the parent data entry.

4. The method of claim 3,
wherein the hash which corresponds to the parent data entry is processed, using the hash function, together with a label associated with the parent data entry to generate a further hash of the given hash size which corresponds to the parent data entry.

5. The method of any one of claims 1 to 4,
wherein the plurality of hashes are recursively combined to form the combined hash using a summation operation.

6. The method of claim 5,
wherein each hash of the plurality of hashes comprises a list of values, and
wherein combining a given subset of the plurality of hashes using the summation operation comprises generating a list of values for the combined hash by performing element-wise addition on the lists of values comprised in the given subset of the plurality of hashes.

7. The method of any one of claims 1 to 6,
wherein a given data entry of the plurality of data entries stored in the hierarchical data structure comprises a key and a value, and
wherein processing the given data entry using the hash function to generate the hash of the plurality of hashes which corresponds to the given data entry comprises processing the key and the value together using the hash function.

8. The method of claim 7,
wherein the key comprises a string label, and
wherein the value comprises string, integer, floating point, boolean, array, object or null-type data.

9. An apparatus comprising:
means for processing, using a hash function which is configured to generate hashes of a given hash size, a plurality of data entries stored in a hierarchical data structure to generate a plurality of hashes which correspond to the plurality of data entries stored in the hierarchical data structure; and
means for generating a checksum for use in verifying an integrity of the plurality of data entries stored in the hierarchical data structure by recursively combining, from a lowest level of a plurality of levels of the hierarchical data structure to a highest level of the plurality of levels of the hierarchical data structure, the plurality of hashes to form a combined hash of the given hash size.

10. The apparatus of claim 9,
wherein the plurality of data entries stored in the hierarchical data structure correspond to a network configuration of a device entering or leaving a network, and
wherein the apparatus comprises:
means for auditing the network configuration of the device by comparing the generated checksum with another checksum received via the network; or
means for transmitting the generated checksum via the network for use in auditing the network configuration of the device.

11. The apparatus of claim 9 or claim 10,
wherein at least two data entries of the plurality of data entries are stored in a particular level of the plurality of levels of the hierarchical data structure and are child data entries of a parent data entry stored in a layer which is higher than the particular layer, and
wherein recursively combining the plurality of hashes to form the combined hash of the given hash size comprises combining hashes of the given hash size which correspond to the child data entries to form a hash of the given hash size which corresponds to the parent data entry.

12. The apparatus of claim 11,
wherein the hash which corresponds to the parent data entry is processed, using the hash function, together with a label associated with the parent data entry to generate a further hash of the given hash size which corresponds to the parent data entry.

13. The apparatus of any one of claims 9 to 12,
wherein the plurality of hashes are recursively combined to form the combined hash using a summation operation.

14. The apparatus of claim 13,
wherein each hash of the plurality of hashes comprises a list of values, and
wherein combining a given subset of the plurality of hashes using the summation operation comprises generating a list of values for the combined hash by performing element-wise addition on the lists of values comprised in the given subset of the plurality of hashes.

15. The apparatus of any one of claims 9 to 14,
wherein a given data entry of the plurality of data entries stored in the hierarchical data structure comprises a key and a value, and
wherein processing the given data entry using the hash function to generate the hash of the plurality of hashes which corresponds to the given data entry comprises processing the key and the value together using the hash function.
